Europäisches Patentamt

European Patent Office

Office européen des brevets

(11) Veröffentlichungsnummer: **0 277 549**
**A2**

(12) **EUROPÄISCHE PATENTANMELDUNG**

(21) Anmeldenummer: 88100831.2

(22) Anmeldetag: 21.01.88

(51) Int. Cl.⁴: **G11B 27/30**

(30) Priorität: 31.01.87 DE 3702861

(43) Veröffentlichungstag der Anmeldung:
10.08.88 Patentblatt 88/32

(84) Benannte Vertragsstaaten:
AT BE CH DE ES FR GB GR IT LI LU NL SE

(71) Anmelder: Deutsche Thomson-Brandt GmbH
Postfach 1307
D-7730 Villingen-Schwenningen(DE)

(72) Erfinder: Niebuhr, Rolf-Michael, Dipl.-Ing.
Görlitzer Strasse 19
D-6054 Radgau 3(DE)

(74) Vertreter: Körner, Peter, Dipl.-Ing.
Deutsche Thomson-Brandt GmbH Patent-
und Lizenzabteilung Göttinger Chaussee 76
D-3000 Hannover 91(DE)

(54) **Recorder.**

(57) Die Erfindung betrifft einen Recorder für digitale Video-und/oder Tonsignale, die in Spuren eines Magnetbandes aufgezeichnet sind. Jede Spur ist durch eine Formatierung in Teilbereiche unterteilt. In einem Adressenbereich werden bei der Aufzeichnung zwei unterschiedliche Adressen vergeben. Die eine Adresse ist eine virtuelle Adressen, die in der ersten Spur einer ersten Aufzeichnung unabhängig vom Ort der Aufzeichnung innerhalb einer Magnetbandlänge vergeben wird. Durch die zweite, reelle Adresse wird nach einer Bandstandsmessung der Ort der aufgezeichneten Spur innerhalb einer Magnetbandlänge gekennzeichnet. Durch Auswertung beider Adressen ist bei einem bespielten Magnetband ein bestimmter Beitrag ansprechbar.

EP 0 277 549 A2

## Recorder

Für die Aufzeichnung und Wiedergabe von Signalen in Magnetspuren ist es erforderlich, eine Zuordnung der in einer Spur enthaltenen Signale zu den in den benachbarten Spuren enthaltenen Signalen herzustellen. Diese Zuordnung wird bei bekannten analogen Videorecordern durch eine Systemnorm vorgegeben.

So wird z.B. nach dem Helical-Scan-Verfahren in einer ersten Spur ein Fernsehhalbbild und in der Nachbarspur das folgende Fernsehhalbbild entsprechend der von einem Fernsehsender abgegebenen zeitlichen Signalfolge aufgezeichnet. Jede Spur wird mit einen rotierenden Magnetkopf geschrieben, an dem das Magnetband derart vorbeigeführt wird, daß sich schräg zur Magnetbandrichtung nebeneinanderliegende Spuren ergeben. Die Synchronisation, d.h. die Anordung der Signale in einer Spur, wird durch die ebenfalls vom Sender abgegebenen Vertikal-Synchronimpulse bestimmt, die am Anfang jeder Spur und zusätzlich auf einer in Bandlängsrichtung verlaufenden Kontrollspur mit aufgezeichnet werden. Bei einem derartigen System ist es nicht möglich, die einzelnen Spuren bei einer Wiedergabe direkt anzusprechen, d.h. exakt zu orten. Es ist lediglich möglich, durch zusätzlich gesetzte Cue-Signale am Anfang einer Aufzeichnung, diese Cue-Signale bei der Wiedergabe zu detektieren und danach mit Hilfe eines Zählwerkes, relativ ungenau, weitere Bandstellen anzusprechen.

In der Zeitschrift "Fernseh-und Kinotechnik" Nr. 5/1984 ist in einem Beitrag über digitale Videoaufzeichnung ein experimenteller digitaler Videorecorder beschrieben. Unter der Überschrift "Synchronisation und Datenanordnung bei der Aufzeichnung", ist auf Seiten 189 und 190 dargelegt, wie der Aufbau einer Datenzeile erfolgen kann. Danach wird jede Zeile am Zeilenanfang mit einer Zeilennummer versehen, die aus vier 8-bit-Worten besteht. Zusätzlich ist in jeder Zeile eine ebenfalls aus vier 8-bit-Worten bestehende Synchronisationsinformation eingefügt. Aus beiden Worten wird bei einer Wiedergabe die Synchronisation abgeleitet. Zwar ist jede Zeile durch die gegebene Zeilennummer gekennzeichnet, es ist aber allein aus der Kenntnis der Nummer keine Angabe möglich, an welchem Ort innerhalb eines Magnetbandes diese Zeilennummer aufgezeichnet ist, wenn z.B. die erste Aufzeichnung nicht am Anfang des Magnetbandes erfolgt.

Es ist Aufgabe der Erfindung, für einen digitalen Videorecorder aufzuzeigen, wie der Ort einer Spur innerhalb einer Magnetbandlänge bei Wiedergabe direkt angesprochen werden kann.

Diese Aufgabe wird gemäß der Erfindung durch die im Anspruch 1 aufgeführten Merkmale gelöst. Weiterbildungen der Erfindung sind in den Unteransprüchen gekennzeichnet.

Im Prinzip wird in jeder Spur neben anderen Bereichen ein Adressenbereich aufgezeichnet, welcher aus zwei verschiedenen Adressen besteht. Die eine Adresse ist eine gegebene, virtuelle Adresse. Sie wird sofort bei einer Aufzeichnung, insbesondere bei einer ersten Aufzeichnung auf einem Magnetband, unabhängig vom Ort der Aufzeichnung auf dem Magnetband, für die erste Spur vergeben. Durch diese Adresse werden somit die erste und alle darauf folgenden Spuren, letztere mit fortlaufendem Zahlenwert, gekennzeichnet. Bei einer ersten Aufzeichnung entspricht der erste vergebene Zahlenwert etwa dem Zahlenwert der gesamten Menge aller möglichen Spuren, die auf einer möglichen abspielbaren Magnetbandlänge in einem Recorder vorkommen kann.

Die andere Andresse, nämlich die reelle Adresse innerhalb des Adressenbereiches, wird durch eine Bandstandsmessung bei Beginn der ersten Aufzeichnung ermittelt. Nach Beendigung der Messung wird diese ermittelte Adresse in der entsprechenden Spur und danach mit kontinuierlicher Zahlenfolge in den einzelnen folgenden Spuren aufgezeichnet. Durch diese reelle Adresse wird also der tatsächliche Ort einer Spur innerhalb einer Magnetbandlänge gekennzeichnet.

Es ist durch verschiedene Anmeldungen, wie z.B. aus der DE-P 35 04 311 bekannt, den genauen Ort einer Aufzeichnung innerhalb einer Magnetbandlänge zu ermitteln. Da bei einem derartigen Verfahren für die ersten aufgezeichneten Spuren vor der Bandstandsmessung noch keine reelle Adresse vergeben werden kann, kann in einem nachträglichen Vorgang, z.B. bei Rückspulen des Magnetbandes, die Vergabe dieser Adressen nachgeholt werden. Dies ist möglich durch Einsatz einer Elektronik in Verbindung mit Zähl-und μP-Schaltungen. Es ist auch mit Hilfe derartiger Schaltungen möglich, aus den bereits vergebenen virtuellen und reellen Adressen einer ersten Aufzeichnung die Adressen für anschließende oder vorangehende Aufzeichnungen zu vergeben, so daß bei einem voll bespielten Band jede Spur mit 2 Adressen mit kontinuierlicher oder unterbrochener Zahlenfolge innerhalb jeder Adressenart versehen ist.

Da die virtuelle Adresse einem aufgezeichneten Beitrag und die reelle Adresse dem Ort der Aufzeichnung innerhalb einer Magnetbandlänge zugeordnet ist, kann der Ort einer Spur mit einem darin enthaltenen Signal (Beitrag) mit Hilfe einer Auswerteschaltung während des Abspielvorganges identifiziert werden.

Es ist möglich, die bei der Aufnahme vergebenen Adressen in einen externen Speicher zu - schreiben (einzulesen), der mit dem Magnetband z.B. außen an der Magnetbandkassette, ähnlich wie in der Anmeldung DE-P 29 43 409 beschrieben, fest verbunden ist. In einem externen Speicher ist damit eine Zuordnung zwischen virtueller, reeller Adresse und Aufzeichnungsbeginn und Ende eines Filmes vorhanden. Bei eingelegter Kassette und bestehendem Magnetband kann dann mit Hilfe einer Anzeige (Display) ein bestimmter Beitrag mit seinem Ort auf dem Magnetband mittels µP Auswertung angezeigt, und durch eine Eingabe, z.B. von Hand, augewählt werden. Dies ist vorteilhaft, z.B. für Insertschnitte oder für eine gezielte Ausschnittwiedergabe.

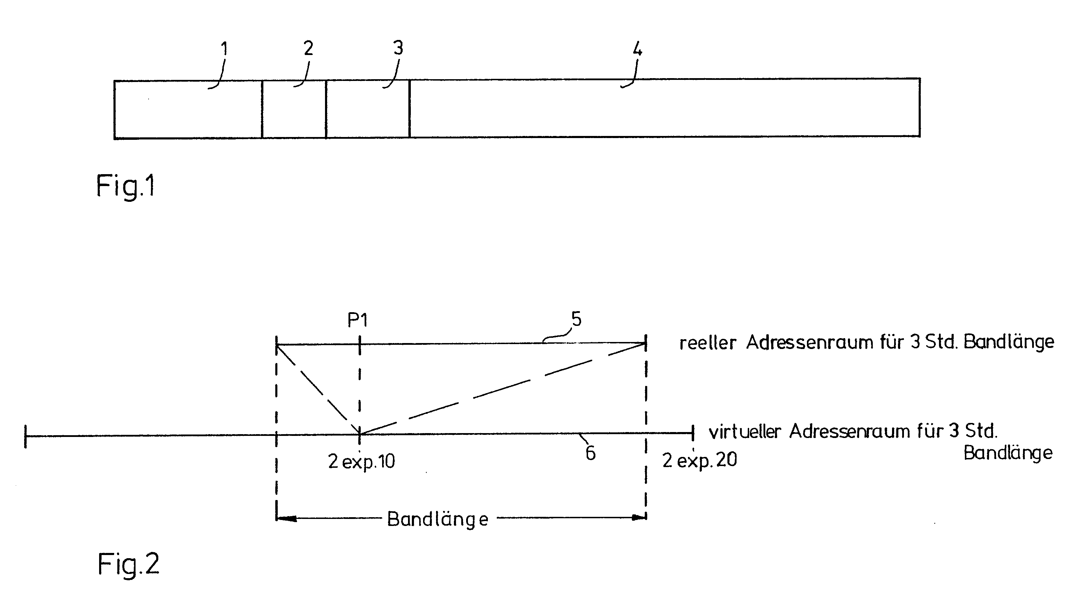

Bei der Aufzeichnung eines zweiten Filmes kann mit Hilfe von µP und Zählschaltungen die Lage des ersten aufgezeichneten Filmes genau lokalisiert und mit Hilfe eines Dislays angezeigt werden. Damit kann auch festgestellt werden, ob für einen zweiten aufzuzeichnenden Film noch genügend Bandlänge zur Verfügung steht. Da der Beginn des ersten Filmes mit ei ner virtuellen Adresse versehen ist, die einer gesamten Bandlänge entspricht, kann, wenn der erste Film am Anfang des Bandes beginnt, einfach die virtuelle Adresse weiter hochgezählt werden. Steht der erste aufgezeichnete Film am Ende eines Bandes, stehen immer noch genügende Adressen zur Verfügung, um noch nach unten zu zählen. Das entspricht in Fig. 2 bei einem Band mit einer Bandlänge von 3 Stunden mit 2 exp. 10 reellen Adressen, einer über diese Bandlänge verschiebbaren doppelt so großen Menge an virtuelle Adressen für etwa 6 Stunden. Die virtuelle Anfangsadresse des ersten aufgezeichneten Filmes ist unter der Voraussetzung, daß ein 3-Stundenband die maximal mögliche abspielbare Bandlänge ist, 1 000 000 000, das entspricht einem Wert 2 exp. 10.

Die Art der Aufzeichnung, d.h. der Spurverlauf innerhalb einer Magnetbandlänge ist nicht von Bedetung, da die Erfin dung sowohl bei Schrägspur-, Querspur-als auch bei Aufzeichnung in Längsspurabschnitten anwendbar ist.

Im folgenden soll die Erfindung anhand der Figur näher erläutert werden.

Es zeigen:

Figur 1 ein Beispiel für die Formatierung einer Spur innerhalb eines Magnetbandes für digital Videorecorder,

Figur 2 einen verschiebbaren virtuellen Speicherraum

In Figur 1 sind neben dem Nutzsignalbereich feste Bereiche zur Synchronisation, Adresse und Zusatzinformationen vorhanden. Die Bereiche sind in Blöcke unterteilt, wobei sich die Anzahl der Blöcke aus der erforderlichen Datenmenge ableitet.

In Bereich 1, am Anfang jeder Spur, sind Blöcke mit Synchronisationsinformationen aufgezeichnet. Sie sind in jeder Spur gleich und dienen bei der Wiedergabe als Taktsignal für die Abtastung sowie der Bit-und Wortsynchronisation für das Nutzsignal und kennzeichnen den Spuranfang.

Bereich 2 ist der Adressenbereich, der ebenfalls für Synchronisationszwecke bei der Wiedergabe mit ausgewertet werden kann. In diesem Bereich ist eine virtuelle sowie eine reelle Adresse für jede Spur gespeichert, wodurch bei der Wiedergabe der Ort einer Aufzeichnung innerhalb einer Magnetbandlänge ansprechbar wird. Beispielhaft soll für einen digitalen Videorecorder die Zahl für eine virtuelle Adresse errechnet werden: Unter der Annahme, daß bei einem 3-Stunden-Band, ähnlich wie bei bekannten analogen Videorecordern nach dem Helical-Scan-Verfharen, in jeder Spur in Halbbild aufgezeichnet wird, werden bei 50 halbbildern pro Sec. für 3 Stunden 50 x 60 x 180 Adressen benötigt. Da die Zahl der vergebenen virtu ellen Adressen, wie bereits beschrieben, etwa der doppelten Menge aller Spuren entsprechen soll, muß diese 2 x 50 x 60 x 180, also 2 exp. 20 sein. Es werden also etwa 20 Bits benötigt. In Blöcken zu je 8 Bits aufgeteilt, würden sich 3 Blöcke ergeben, wobei 4 Bits als Reserve dienen.

Da die reelle Adresse zahlenmäßig etwa in der halben Größenordnung wie die virtuelle Adresse liegt, müssen hierfür 2 Blöcke zu je 8 Bit mit 6 Bit Reserve vergeben werden, so daß der Adressenbereich aus 5 Blöcken besteht, die z.B. als Biphasesignal aufgezeichnet sein können.

Bereich 3 ist ein sogenannter Statusbereich, in dem bildbezogene Informationen enthalten sind, die z.T. auch von Hand eingegeben werden können, während Bereich 4 durch das Nutzsignal ausgefüllt wird.

Die Anordnung der einzelnen Bereiche innerhalb der Spuren ist konstant, jedoch ist die Reihenfolge bei der Festlegung einer Systemnorm frei wählbar, wenn z.B. Speicher für die Auswertung bei der Wiedergabe eingesetzt werden.

Die Figur 2 zeigt einen verschiebbaren virtuellen Speicherraum 6. Zugeordnet in der Zeichnung ist ein Band 5 mit einer Bandlänge von 3 Stunden mit etwa 2 exp. 10 reellen Adressen. Über diese Bandlänge ist verschiebbar eine doppelt so große Menge an virtuellen Adressen für etwa 6 Stunden dargestellt. Die virtuelle Anfangsadresse des ersten aufgezeichneten Filmes ist also erfindungsgemäß 1 000 000 000, das entspricht einem Wert 2 exp. 10. In der Figur liegt die erste virtuelle Adresse am Punkt P1, etwa im ersten Drittel der gesamten Bandlänge. Aus der Zeichnung ist ersichtlich, daß auch bei einer ersten Aufzeichnung selbst am Bandende genügend virtuelle Adressen vorhanden sind, um auch für die später erfol gende Aufzeichnung am Bandanfang noch virtuelle Adressen ausgeben zu können.

**Ansprüche**

1. Recorder für die Aufzeichnung und/oder Wiedergabe von digitalen Video-und/oder Tonsignalen in Spuren eines Magnetbandes, mit einer Formatierung innerhalb einer Spur in verschiedene Teilbereiche, dadurch gekennzeichnet, daß bei der Aufzeichnung in einem Adressensignalbereich zwei unterschiedliche Adressen aufgezeichnet sind.

2. Recorder nach Anspruch 1, dadurch gekennzeichnet, daß der Adressensignalbereich eine gegebenen virtuelle Adresse enthält.

3. Recorder nach Anspruch 1 und/oder 2, dadurch gekennzeichnet, daß der Adressensignalbereich eine stationäre reelle Adresse enthält.

4. Recorder nach Anspruch 1,2 oder Anspruch 3, dadurch gekennzeichnet, daß die erste virtuelle Adresse in der ersten Spur einer ersten Aufzeichnung enthalten ist.

5. Recorder nach einem der Ansprüche 1 - 4, dadurch gekennzeichnet, daß die reelle Adresse am Beginn der ersten Aufzeichnung nach einer Bandstandsmessung den tatsächlichen Ort der Spur innerhalb einer Magnetbandlänge kennzeichnet.

6. Recorder nach Anspruch 5, dadurch gekennzeichnet, daß die am Beginn einer ersten Aufzeichnung vor der Bandstandsmessung aufgezeichneten Spuren nachträglich mit einer reellen Adresse versehen werden.

7. Recorder nach einem der Ansprüche 1 - 6, dadurch gekennzeichnet, daß durch die Zuordnung von virtueller und reeller Adresse in einem Adressenbereich der Ort einer Spur mit virtueller Adresse innerhalb einer Magnetbandlänge gekennzeichnet ist.

8. Recorder nach Anspruch 4, dadurch gekennzeichnet, daß die erste ausgegebene virtuelle Adresse in der ersten Spur einer ersten Aufzeichnung, unabhängig vom Ort der Aufzeichnung auf dem Magnetband, mit einer Zahl ausgegeben wird, die etwa der Menge aller Spuren eines voll bespielten Magnetbandes entspricht, wobei die Menge aller Spuren von der größten Länge eines im Recorder abspielbaren Magnetbandes abgeleitet ist.

9. Recorder nach einem der Ansprüche 1 - 8, dadurch gekennzeichnet, daß bei einem voll bespieltem Magnetband alle aufgezeichneten Spuren mit einer im Zahlenwert fortlaufenden virtuellen und reellen Adresse versehen sind.

10. Recorder nach einem der Ansprüche 1 - 9, dadurch gekennzeichnet, daß aus einem externen Speicher die reellen Adressen von aufgezeichneten Filmen auslesbar sind.

11. Recorder nach einem der Ansprüche 1 - 10, dadurch gekennzeichnet, daß in einem externen Speicher die reellen Adressen von aufgezeichneten Filmen schreibbar sind.

0 277 549

**Fig.1**

P1      5      reeller Adressenraum für 3 Std. Bandlänge

virtueller Adressenraum für 3 Std. Bandlänge

$2\,\text{exp.}10$     6     $2\,\text{exp.}20$

Bandlänge

**Fig.2**